# EUROPÄISCHE PATENTSCHRIFT

(11) **EP 1 352 766 B1**
(45) Veröffentlichungstag und Bekanntmachung des Hinweises auf die Patenterteilung: **21.05.2008**
(21) Anmeldenummer: 03007887.7
(22) Anmeldetag: 04.04.2003
(51) Int. Cl.: B60J 5/10

(54) **Heckklappenanordnung für ein Fahrzeug**
Hatchback system for a motor vehicle
Système de hayon pour automobile

(30) Priorität: 11.04.2002 DE 10215977
(43) Veröffentlichungstag der Anmeldung: 15.10.2003
(73) Patentinhaber: Webasto AG, 82131 Stockdorf (DE)
(72) Erfinder: De Gaillard, Francois, 85390 Mouilleron en Pareds (FR); De Waal, Martin, 1566 TS Assendelft (NL); Guicheteau, Jean-Luc, 49300 Cholet (FR); Kimoto, Izumi, Saeki-gun, Hiroshima-ken 739-0413 (JP); Kölbl, Michael, 82061 Neuried (DE); Mitterbauer, Peter, 4810 Gmunden (AT); Pollak, Martin, 82178 Puchheim (DE); Righetti, Claudio Ivano, 10139 Torino (IT); Schönauer, Miriam, 85405 Nandlstadt (DE); Ueki, Sigeru, Higashihiroshima-city 739-2115 (JP); Vecchioni, Bernhard, Oxford, Michigan 48371 (US)
(74) Vertreter: Schwan - Schwan - Schorer

(56) Entgegenhaltungen:
- WO-A-86/00109
- DE-U- 9 404 461
- FR-A- 2 705 307
- US-A- 4 188 061
- US-A- 4 634 170

## Beschreibung

Die vorliegende Erfindung betrifft eine Heckklappenanordnung für ein Kraftfahrzeug gemäß dem Oberbegriff von Anspruch 1.

Schwenkbare Heckklappen für Kraftfahrzeuge sind seit langem bekannt. Die Heckklappe ist dabei üblicherweise lediglich in der Schließstellung arretierbar. Wenn nun die Heckklappe aufgrund eines sperrigen Gegenstands im Heckstauraum des Fahrzeugs nicht vollständig in die Schließstellung gebracht werden kann, ist die Heckklappe im Fahrbetrieb nicht ausreichend gesichert und kann durch Beschleunigungsvorgänge bzw. Fahrtwindeinwirkungen auf das überstehende Ladegut schlagen oder, in der vollständig geöffneten Stellung, zu einer Belastung des Schwenkanschlags führen.

Aus der DE 140 40 698 A1 ist eine Heckklappe bekannt, welche mit einem separat zu öffnenden Heckfenster versehen ist, um es zu ermöglichen, dass Transportgüter in das Fahrzeuginnere durch das offene Heckfenster geschoben werden können. Entlang des unteren Öffnungsrands ist eine rollenförmige Auflage vorgesehen, welche bei geschlossenem Heckfenster nach unten in eine Ruhestellung in der Heckklappe schwenkbar ist. Die DE 94 04 461, die US-A-4, 188, 061 sowie die US-A-4, 634,170 beschreiben Hechklappenanordnungen bzw. einen Kofferraumdeckel, wobei der jeweilige Deckel mittels einer Fixierungsanordnung an einem dem Anlenkpunkt entgegengesetzten Ende des Deckels fixiert werden kann. Die Fixierungsanordnungen weisen dabei teleskopartige Distanzhalter oder mittels einer Feder vorgespannte Gurte auf.

Es ist Aufgabe der vorliegenden Erfindung, eine Heckklappenanordnung für ein Kraftfahrzeug zu schaffen, welche auch bei aufgrund über die Hecköffnung überstehenden Ladeguts nicht oder nicht vollständig geschlossener Heckklappe einen sicheren und beschädigungsfreien Fahrbetrieb erlaubt.

Diese Aufgabe wird erfindungsgemäß gelöst durch eine Heckklappenanordnung, wie sie in Anspruch 1 definiert ist. Bei dieser erfindungsgemäßen Lösung ist vorteilhaft, dass dadurch, dass eine Fixierungsanordnung vorgesehen ist, um die Heckklappe in der Öffnungsstellung bzw. einer Zwischenstellung festzuhalten, auch bei nicht oder nicht vollständig geschlossener Heckklappe eine hinreichende Fixierung der Heckklappe möglich ist, um zu verhindern, dass die Heckklappe im Fahrbetrieb beispielsweise auf- und abschlägt und dadurch Beschädigungen und/oder Klappergeräusche verursacht.

Bevorzugte Ausgestaltungen der Erfindung ergeben sich aus den Unteransprüchen.

Der Begriff "Heckklappe" soll so verstanden werden, dass er alle Elemente umfasst, welche am Fahrzeugheck schwenkbar an der Karosserie angelenkt sind, um eine Hecköffnung wahlweise zu verschließen oder freizugeben. Insbesondere kann es sich dabei um eine bis zur Ladekante reichende Heckklappe mit integrierter Heckscheibe oder um eine zu öffnende Heckscheibe handeln.

Im folgenden wird die Erfindung anhand der beigefügten Zeichnungen beispielhaft näher erläutert. Dabei zeigen:
Fig. 1 eine schematische perspektivische Ansicht eines Fahrzeugs mit geöffneter Heckscheibe gemäß einer ersten Ausführungsform;
Fig. 2 eine Schnittansicht des Fahrzeughecks aus Fig. 1 in Fahrzeuglängsrichtung;

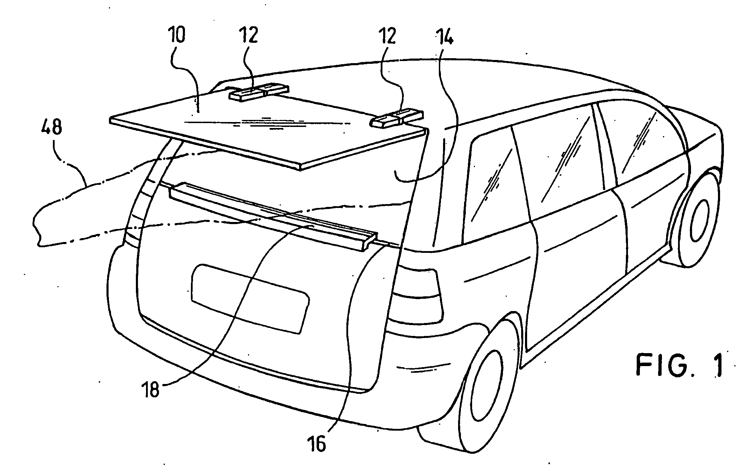

In Fig. 1 ist schematisch ein Kraftfahrzeug mit einer zu öffnenden Heckscheibe 10 dargestellt, welche an ihrem oberen bzw. vorderen Ende über eine Scharnieranordnung 12, die an jeder Seite ein Scharnier umfasst, am hinteren Dachrand schwenkbar angelenkt ist, um eine Hecköffnung 14 wahlweise zu verschließen (wenn die Heckscheibe 10 nach unten geschwenkt ist) bzw. zum Beladen freizugeben (wenn die Heckscheibe, wie in Fig. 1 dargestellt, nach oben in ihre Öffnungsstellung geschwenkt ist, in welcher sie im wesentlichen parallel zur Dachfläche angeordnet ist). Die Scharniere 12 sind so ausgebildet, dass die Heckscheibe 10 in dieser in Fig. 1 gezeigten Öffnungsstellung verriegelbar ist, um einen zuverlässigen Fahrbetrieb ohne Klappern und Schlagen der Heckscheibe 10 in dieser Position zu ermöglichen. Dies ist insbesondere dann wünschenswert, wenn das Fahrzeug mit einem sperrigen Ladegut 16 beladen ist, dessen hinteres Ende sich durch die Hecköffnung 14 hindurch nach außen erstreckt und über das Heck des Fahrzeugs übersteht.

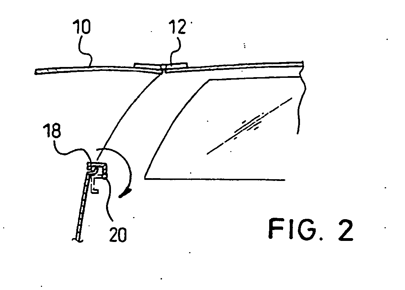

Um eine Beschädigung des unteren Rands 18 der Hecköffnung 14 durch das Ladegut 16 zu verhindern, ist eine Abdeckeinrichtung 18 vorgesehen, welche um eine in Fahrzeugquerrichtung verlaufende Schwenkachse 20 zwischen einer Ablagestellung, die in Fig. 2 in gestrichelten Linien dargestellt ist, und einer Funktionsstellung, in welcher die Abdeckanordnung die Kante 16 verdeckt, schwenkbar ist.

Mit der in Fig. 1 und 2 beschriebenen Anordnung kann auch sperriges Ladegut im Fahrzeug transportiert werden, indem die Heckscheibe 10 nach oben verschwenkt und in der Öffnungsstellung mittels der Scharniere 12 verriegelt wird, wobei eine Beschädigung der unteren Kante der Hecköffnung 14 mittels der Abdeckeinrichtung 18 vermieden wird. Mittels der Verriegelung der Heckscheibe 10 in der Öffnungsstellung kann verhindert werden, dass die Heckscheibe 10 im Fahrbetrieb schlägt oder klappert.

Das beschriebene Prinzip lässt sich statt auf eine schwenkbare Heckscheibe auch auf eine herkömmliche Heckklappe anwenden, in welche eine feste Heckscheibe integriert ist. In einem solchen Fall wird dann die gesamte Heckklappe in der Öffnungsstellung verriegelt.

## Patentansprüche

1. Heckklappenanordnung für ein Kraftfahrzeug, mit einer Heckklappe (10), die zwischen einer Schließstellung, in welcher sie eine Hecköffnung (14) des Fahrzeugs verschließt, und einer Öffnungsstellung, in welcher sie die Hecköffnung mindestens zum Teil freilegt, verschwenkbar ist, wobei eine Fixierungsanordnung (12) vorgesehen ist, um die Heckklappe (10) festzuhalten, **dadurch gekennzeichnet, dass** die Fixierungsanordnung (12) so ausgebildet ist, dass die Heckklappe (10) an ihrem Anlenkpunkt an der Fahrzeugkarosserie in der Öffnungsstellung verriegelbar ist.

2. Heckklappenanordnung nach Anspruch 1, **dadurch gekennzeichnet, dass** die Heckklappe (10) an ihrem oberen Rand an mittels einer Scharnieranordnung (12) an der Fahrzeugkarosserie angelenkt ist, wobei die Scharnieranordnung bei in Öfihtmgsstellung befindlicher Heckklappe verriegelbar ist und so die Fixierungsanordnung bildet.

3. Heckklappenanordnung nach einem der vorhergehenden Ansprüche, **dadurch gekennzeichnet, dass** es sich bei der Heckklappe um eine Heckscheibe (10) handelt.

## Claims

1. Hatchback arrangement for a motor vehicle, comprising a hatch (10), which is pivotable between a closed position, in which it closes a rear opening (14) of the vehicle, and an opened position, in which it at least partially exposes the rear opening, wherein there is further provided a fixing means (12) to fix the hatch (10), **characterized in that** the fixing means (12) is designed such that the hatch (10) can be locked at its pivot point at the vehicle body.

2. Hatchback arrangement as defined in claim 1, **characterized in that** the hatch (10) is hinged at its upper edge to the vehicle body by means of a hinge arrangement (12), which can be locked when the hatch is in its opened position, so as to constitute the fixing means.

3. Hatchback arrangement as defined in any one of the preceding claims, **characterized in that** the hatch comprises the rear window.

## Revendications

1. Système de hayon pour un véhicule automobile, avec un hayon (10) qui peut être pivoté entre une position fermée, dans laquelle il ferme une ouverture arrière (14) du véhicule, et une position ouverte dans laquelle il dégage au moins partiellement l'ouverture arrière, sachant qu'il est prévu un système d'immobilisation (12) pour maintenir bloqué le hayon (10), **caractérisé en ce que** le système d'immobilisation (12) est conçu de telle sorte que le hayon (10) peut être verrouillé dans la position ouverte à son point d'articulation sur la carrosserie du véhicule.

2. Système de hayon selon la revendication 1, **caractérisé en ce que** le hayon (10) est articulé sur son bord supérieur au moyen d'un système de charnière (12) sur la carrosserie du véhicule, le système de charnière pouvant être verrouillé lorsque le hayon se trouve dans la position ouverte et constituant ainsi le système d'immobilisation.

3. Système de hayon selon l'une des revendications précédentes, **caractérisé en ce que** le hayon arrière est une vitre arrière (10).
